# EUROPÄISCHE PATENTSCHRIFT

(11) **EP 0 365 957 B1**
(45) Veröffentlichungstag und Bekanntmachung des Hinweises auf die Patenterteilung: **25.08.1993**
(21) Anmeldenummer: 89119140.5
(22) Anmeldetag: 14.10.1989
(51) Int. Cl.: C08F 251/02, C09D 151/08

(54) **Celluloseester/Polymerkombinationen, deren Herstellung und Verwendung**
Combinations of a cellulose ester and a polymer, their preparation and their use
Combinaisons ester de cellulose/polymère, leur préparation et leur utilisation

(30) Priorität: 28.10.1988 DE 3836779
(43) Veröffentlichungstag der Anmeldung: 02.05.1990
(73) Patentinhaber: Wolff Walsrode Aktiengesellschaft, D-29655 Walsrode (DE)
(72) Erfinder: Hoppe, Lutz, Dr., D-3030 Walsrode (DE); Koch, Wolfgang, Dr., D-3036 Bomlitz (DE); Lühmann, Erhard, D.I., D-3036 Bomlitz (DE); Piepho, Michael, Dr., D-3210 Elze 1 (DE)
(74) Vertreter: Zobel, Manfred, Dr.

(56) Entgegenhaltungen:
- EP-A- 0 035 669
- EP-A- 0 065 279

## Beschreibung

Gegenstand der Erfindung sind rieselfähige Celluloseester/Polymerkombinationen, Verfahren zur deren Herstellung und ihre Verwendung in Lackbindemitteln, vorzugsweise auf Isocyanat-Basis.

Es ist bekannt, Nitrocellulose in Polyurethanlacken einzuarbeiten, Dadurch wird allgemein der Trocknungsverlauf, die Pigmentierbarkeit und der Glanz verbessert.

Da Nitrocellulose im trockenen Zustand leicht durch Stoß oder Reibung entzündet werden kann, müssen handelsübliche Nitrocellulosen ein Anfeuchtungsmittel in einer Menge von mindestens 25 Gew.-% enthalten, um damit die Brandgefahr bei der Lagerung der Handhabung sowie beim Transport zu verringern. Als derartige Anfeuchtungsmittel finden z.B. Ethanol, Isopropanol oder n-Butanol Anwendung.

Beim Zusatz dieser Nitrocellulosen zu Polyurethanlacken besteht das Problem, daß der Anfeuchtungsalkohol mit den Isocyanatgruppen reagiert und die Lackqualität herabgesetzt wird. Es bilden sich niedermolekulare Verbindungen, die im Lackfilm als unerwünschte Weichmacher wirken.

Es wurde daher versucht, als Anfeuchtungsmittel inerte Lösungsmittel zu verwenden. Dabei wird entsprechend der DE-A-3 041 085 mit Alkohol und/oder Wasser angefeuchtete Nitrocellulose in einem Lösungsmittel, das die Nitrocellulose löst oder in einem azeotropen Gemisch, bestehend aus einem Löser und einem Nichtlöser, gelöst. Anschließend wird diese Nitrocelluloselösung so destilliert, daß der Alkohol und/oder Wasser abgetrennt wird.

Dieses Verfahren zur Herstellung von mit flüssigen Kohlenwasserstoffverbindungen, wie z.B. Toluol oder Xylol, angefeuchteten Nitrocellulosen ist aus sicherheitstechnischen Gründen, wie z.B. der elektrostatischen Aufladung, schwierig zu handhaben und sehr kostenintensiv. Dieses gilt auch für das in der US-A-3 284 253 beschriebene Verfahren zur Herstellung von mit einem flüssigen Kohlenwasserstoff angefeuchteten Nitrocellulose, wobei auch hier die Wasserabtrennung durch eine azeotrope Destillation erfolgt.

Die gemäß der Anmeldung EP-A-0 172 482 hergestellten Nitrocellulosen, die mit tert.-Butanol angefeuchtet sind, lassen sich einfach nach den üblichen Verdrängermethoden herstellen. Dieses Verfahren hat aber den Nachteil, daß die zur Wasserverdrängung notwendige Menge an tert.-Alkoholen groß ist, wenn ein Wassergehalt von kleiner als 0,1 Gew.-% verlangt wird.

Für Polyurethanlacke werden Nitrocellulosen verwendet, die mit Weichmachern plastifiziert sind. Als derartige Weichmacher finden z.B. Dibutylphthalat oder Dioctylphthalat Anwendung. Solche niedermolekularen Weichmacher, die keine Hydroxylgruppen enthalten, setzen die Qualität der Lackschicht deutlich herab. Der Einbau von hydroxylgruppenhaltigen Weichmachern ist nach dem Stand der Technik allgemein nur mit einem erheblichen Mehraufwand, wie z.B. unter Verwendung von zusätzlichen Lösungsmitteln, die später destillativ entfernt werden müssen, technisch realisierbar.

Die gemäß DE-A-25 29 547 verwendeten wasserlöslichen Emulgatoren und Schutzkolloide mindern in den aufgeführten Konzentrationen die Lackqualitäten deutlich, da sie mit diesen Nitrocellulose-Polymerkombinationen unverträglich sind. Diese Unverträglichkeit führt zu Trübungen im Lackfilm und setzt die Beständigkeit gegen Wasser herab.

Aus EP-A 35 669 sind wäßrige, sehr feinteilige Polymerdispersionen bekannt, die aus (Meth)acrylsäureesterpolymeren, Celluloseestern und fettsäuremodifizierten Harzen sowie üblichen Zusatzstoffen bestehen. Die Teilchengröße der dispergierten Partikel liegt nur im Bereich von 0,01 - 1,5 µm.

Auch in der EP-A 65 279 werden sehr feinteilige Kunstharzpartikel, insbesondere Copolymere, in einem organischen Lösungsmittel dispergiert und mit Hilfe von Celluloseestern stabilisiert. Auch hier kommt es darauf an, sehr feinteilige Partikel einzusetzen. Eine gute Sedimentierfähigkeit der Dispersionsteilchen läßt sich damit jedoch nicht erreichen.

Aufgabe der Erfindung war es, derartige Celluloseester-polymerkombinationen bereitzustellen, die die bekannten Nachteile nicht aufweisen und bereits bei der Herstellung möglichst als sedimentierfähige Dispersionsteilchen anfallen.

Gegenstand der Erfindung sind Celluloseester-Polymer-Kombinationen enthaltend wenigstens einen Celluloseester A, wenigstens ein polymerisiertes Monomer B, sowie ein wasserunlösliches Dispergierhilfsmittel D dadurch gekennzeichnet, daß das Monomer B folgender Formel entspricht 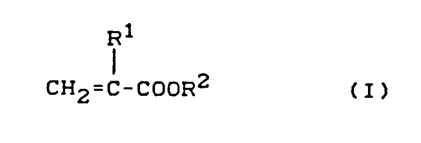
in der
- R¹: ein Wasserstoffatom oder eine Methylgruppe und
- R²: ein Wasserstoff, ein Alkylrest mit 1-20 Kohlenstoffatomen, ein Cycloalkylrest mit 5 oder 6 Kohlenstoffatomen, -(CH₂-CH₂-O)ₙ-R³ (mit R³ als H, CH₃ oder C₂H₅ und n = 2 - 50), -C₆H₅ oder -CH₂C₆H₅ bedeuten,

und wobei die Teilchen der Kombination im wesentlichen eine Größe von 0,1 bis 10 mm aufweisen.

In einer bevorzugten Ausführungsform liegt der Gewichtsanteil der Hydroxylgruppen von A und B, bezogen auf den gesamten Feststoffgehalt zwischen 0,1 und 9 Gew.-%, insbesondere zwischen 1 bis 6 Gew.-%. In einer anderen bevorzugten Ausführungsform beträgt die oben angegebene Teilchengröße 0,5 bis 5 mm. Der Anteil niedermolekularer Verbindungen beträgt vorzugsweise weniger als 0,3 Gew.-%, bezogen auf die Kombination. Unter niedermolekularen Verbindungen werden Verbindungen mit einem Molekulargewicht < 300 verstanden, insbesondere Alkohole aus der angefeuchteten Nitrocellulose, Restmonomere und Wasser.

Das wasserunlösliche Dispergierhilfsmittel D ist vorzugsweise in einer Konzentration von maximal 5 Gew.-%, vorzugsweise von 0,05 bis 0,5 Gew.-%, bezogen auf alle Feststoffe in der erfindungsgemäßen Kombination, enthalten.

Gegenstand der Erfindung ist weiterhin ein Verfahren zur Herstellung der erfindungsgemäßen Celluloseester-Polymerkombinationen, dadurch gekennzeichnet, daß wenigstens ein Celluloseester A und wenigstens ein Monomer B in wäßrigem Medium dispergiert und polymerisiert werden, dadurch gekennzeichnet, daß das Monomer B folgender Formel entspricht 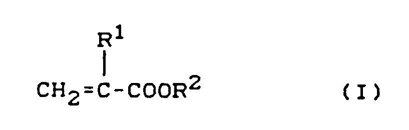
in der
- R¹: ein Wasserstoffatom oder eine Methylgruppe und
- R²: ein Wasserstoff, ein Alkylrest mit 1-20 Kohlenstoffatomen, ein Cycloalkylrest mit 5 oder 6 Kohlenstoffatomen, -(CH₂-CH₂-O)ₙ-R³ (mit R³ als H, CH₃ oder C₂H₅ und n = 2 - 50), -C₆H₅ oder -CH₂C₆H₅ bedeuten,

in wässrigem Medium in Gegenwart eines wasserunlöslichen dispergierhilfsmittels und ggf. in Gegenwart von wasserlöslichen Emulgatoren in einer Menge von bis zu 0,1 gew.% mittels Öllöslicher radikalbildender Initiatoren polymerisiert und der Festkörper abgetrennt wird.

Gegenstand der Erfindung ist weiterhin ein Verfahren zur Herstellung eines Lackes, dadurch gekennzeichnet, daß eine erfindungsgemäße Celluloseester-Polymerkombination verwendet wird.

Als Celluloseester A eignen sich vorzugsweise Cellulosenitrate aller Viskositätsstufen. Ganz besonders geeignet sind Cellulosenitrate in den üblichen Lackqualitäten, d.h. mit einem Stickstoffgehalt von 10,0-12,6 Gew.-%. Es ist jedoch durchaus denkbar, andere Celluloseester, wie z.B. Celluloseacetobutyrat oder Celluloseacetat zu verwenden.

Als polymerisierbare Monomere B oder Monomerenmischungen eignen sich solche, die Lösungseigenschaften gegenüber Cellulosenitrat besitzen, insbesondere Butylacrylat, Methylmethacrylat, Butylmethacrylat und Methylacrylat.

Zusätzlich können weitere polymerisierbare Monomere C erfindungsgemäß eingesetzt werden. Die erfindungsgemäßen Polymere C werden vorzugsweise in einer Menge von 2 bis 80 Gew.-%, bezogen auf das Gesamtgewicht der Monomeren B, insbesondere von 5 bis 50 Gew.-%, bezogen auf das Gesamtgewicht von B, eingesetzt.

Besonders bevorzugte derartige Monomere C sind im folgenden angegeben
C1. Styrol und substituierte Styrole der nachstehenden allgemeinen Formel II 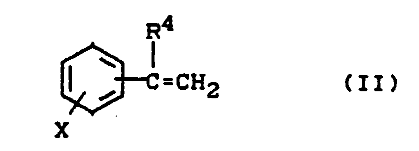 wobei
   - R⁴: ein H- oder -CH₃ und X ein Wasserstoff- oder Halogenatom (z.B. ein Chlor- oder Bromatom) oder eine Methylgruppe bedeutet.
C2. Vinylester wie Vinylacetat, Vinylpropionat und -butyrat. Bevorzugt wird Vinylacetat.
C3. Vinylchlorid und Vinylidenchlorid
C4. Ein Monomer der nachstehenden allgemeinen Formel 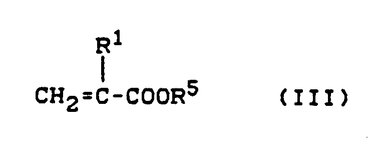 in der
   - R¹: H oder CH₃ sein können und
   - R⁵: eine Alkylgruppe mit 1-6 C-Atomen, die mindestens eine OH-Gruppe enthält, darstellen.
C5. Außerdem können Acrylnitril oder Methacrylnitril zugegen sein.
C6. Umsetzungsprodukte aus Hydroxyethylacrylat, Hydroxypropylacrylat, Hydroxypropylmethacrylat oder Hydroxyethylmethacrylat und Monoisocyanaten oder Epoxiden.
C7. Allylether, wie z.B. Trimethylolpropanmonoallylether.

Außerdem können Verbindungen E, die mehr als eine Doppelbindung pro Moleküle enthalten, wie z.B. Epoxipolyacrylate, Polyester-polyacrylate, Polyurethan-polyacrylate oder den entsprechenden Methacrylaten oder Polyallyletherverbindungen, in einer Menge von höchstens 10 Gew.-%, bezogen auf die eingesetzten Gesamtmonomeren, verwendet werden.

Ferner ist es auch möglich, der erfindungsgemäßen Monomerenlösung Harze oder solche Weichmacher, die mindestens 2 Hydroxylgruppen pro Molekül enthalten, beizugeben. Auch können solche Verbindungen hinzugesetzt werden, die die Brennbarkeit der Celluloseester-Polymerkombination herabsetzen.

Die Herstellung der erfindungsgemäßen Cellulose-Polymerkombination erfolgt durch Polymerisation einer emulgierten Celluloseester-Monomermischung im wäßrigen Medium und anschließender Abtrennung der Festkörper mit gegebenenfalls notwendiger Trocknung. Die erfindungsgemäße Kombination enthält bezogen auf den gesamten Feststoffgehalt vorzugsweise 2-82, insbesondere 10-70 Gew.-Teile Celluloseester A und 18-98, insbesondere 30-90 Gew.-Teile polymerisiertes B.

Verfahren zur Herstellung der wäßrigen Emulsion sind allgemein bekannt und z.B. in Kapitel 6 des Buches von Paul Becker, "Emulsions: Theory and Practice", Reinhold Publishing Corp., New York, 1965, beschrieben. Die Emulgierung kann erfolgen durch einfaches Verrühren aller Bestandteile der Reaktionsmischung im Reaktionsgefäß oder durch Vorlösen des Polymeren (Celluloseesters) in den Monomeren und anschließender Emulgierung dieser Lösung in Wasser. Emulgiert werden kann des weiteren mit Hilfe der Ultraschallmischmethode, der Düsenmischmethode, durch Einsatz von Mischern sowie durch Kombinationen dieser Methoden. In einer bevorzugten Ausführungsform wird der Celluloseester in dem Monomeren oder der Monomermischung gelöst und diese Lösung vorgelegt.

Die für das Vorlösen der Celluloseester in den Monomeren erforderliche Zeit hängt stark von der Löslichkeit des Celluloseesters in den Monomeren, vom Molekulargewicht des Celluloseesters und von den Mengenverhältnissen ab. Sie kann variieren zwischen einigen Minuten und mehreren Tagen, bevorzugt werden Mischungen mit Lösezeiten von 10 Minuten bis 5 Stunden.

Die Temperatur kann während der Emulgierung konstant sein oder variiert werden. Sie kann im Bereich von 0 bis 110°C, im Fall des Verlösens der Celluloseester in den Monomeren bis 150°C liegen, bevorzugt werden Temperaturen von 20 bis 100°C.

Die Emulgierung kann in jedem beliebigen Gefäß stattfinden, vorzugsweise jedoch in dem zur Polymerisation verwendeten Reaktor. Das System kann offen (Normaldruck) oder verschlossen sein. Bevorzugt werden Druckbehälter (Autoklaven). Die Druckbedingungen während der Emulgierung hängen von Dampfdruck der Monomeren und sonstigen Zusätzen sowie von der angewendeten Temperatur ab.

Durch radikalische Polymerisation wird die wäßrige Celluloseester-Monomer-Emulsion in eine wäßrige Polymerdispersion umgewandelt. Die Dispersionsteilchen enthalten bevorzugt den Celluloseester A und das polymerisierte Monomer B, wobei der Aufbau jedes Dispersionsteilchens in der Regel homogen ist.

Die Polymerisation findet vorzugsweise in demselben Gefäß statt, in dem die wäßrige Emulsion hergestellt wurde. Besonders bevorzugt sind Drucksysteme (Autoklaven). Je nach der Art der Bestandteile des Ansatzes findet die Polymerisation unter Normaldruck oder erhöhtem Druck statt. Bewährt hat sich auch die Überlagerung des Reaktionsgemisches mit einem Inertgas.

Die Polymerisation kann kontinuierlich, diskontinuierlich oder nach dem Kaskaden-Prinzip durchgeführt werden. Die Reaktion erfordert einen radikalbildenden Initiator, der auf einmal, portionsweise oder kontinuierlich zugegeben wird. Die Zugabe kann in Substanz oder in Lösung erfolgen. Bevorzugt wird die Zugabe des Initiators zur Monomerenmischung.

Neben einzelnen Initiatoren können auch Gemische mehrerer Initiatoren zum Einsatz kommen. Bevorzugt sind Mischungen von Initiatoren unterschiedlicher Zerfallsgeschwindigkeiten.

Die Polymerisationstemperatur liegt vorzugsweise im Bereich von 0 bis 120°C, vorzugsweise von Raumtemperatur bis 80°C. Die Polymerisationsdauer kann einige Minuten bis mehrere Stunden betragen und liegt vorzugsweise im Bereich von 1 bis 8 Stunden.

Als Initiatoren eignen sich öllösliche, radikalbildende Verbindungen.

Beispiele für einsetzbare öllösliche Verbindungen sind organische Peroxide und Hydroperoxide, wie Benzoylperoxid,Laurylperoxid und Cyclohexanonhydroperoxid, Percarbonate, wie Myristinpercarbonat und Azoverbindungen, wie Azobisisobutyronitril.

Die Anteile der verwendeten Initiatoren liegen vorzugsweise im Bereich von 0,1 bis 10 Gew.-%, vorzugsweise von 0,5 bis 5 Gew.-%, bezogen auf die Summe der polymerisierbaren Verbindungen. Die Molekulargewichte können in der üblichen Weise durch Zusatz von Kettenüberträgern und Reglern begrenzt werden.

Beispiele für einsetzbare Kettenüberträger sind Bis(isopropylxanthogen)disulfid, Mercaptoethanol oder Mercaptopropionsäure.

Die Gewinnung der erfindungsgemäßen Celluloseester-Polymerpartikel kann nach bekannten Verfahren erfolgen, z.B. durch Zentrifugieren, Absieben, Sprühtrocknen, Gefriertrocknen oder Wirbelbettrocknen. Die Trocknung kann unter Normaldruck oder im Vakuum erfolgen. Bevorzugt werden Drücke von 1 bis 50 mbar. Die Trocknungstemperaturen sollten 120°C nicht überschreiten, bevorzugt werden Temperaturen zwischen 40 und 80°C, wobei während des Trocknungsvorgangs zu den erfindungsgemäßen Celluloseester-Polymerpartikeln gegebenenfalls weitere Kombinationspartner, wie z.B. Oberflächenhilfsmittel, Trocknungsbeschleuniger oder die Entflammbarkeit reduzierende Substanzen, zugesetzt werden können.

Als wasserunlösliche Dispergierhilfsmittel D eignen sich nichtionogene Substanzen:
Beispiele für nichtionogene Substanzen D sind ethoxylierte ein- und mehrwertige Alkohole (d.h. die Ethylenoxidderivate dieser Alkohole), Ethylenoxid/Propylenoxid-Blockcopolymere, Ester (z.B. Glycerylmonostearat), ethoxylierte Öle, wie z.B. Ethoxylierungsprodukte von Rizinus- oder Sojaöl, Dehydratisierungsprodukte von Sorbit, z.B. Sorbitanmonostearat und Polyethylenoxidsorbitanmonolaurat sowie Laurinsäureisopropanolamid.

Die Wasserunlöslichkeit wird in der Regel durch niedrige Ethoxylierungsgrade erreicht. Ebenfalls einsetzbar sind wasserunlösliche Cellulosederivate, wie z.B. Ethyl- bzw. Propylcellulose und synthetische Harze.

Ebenfalls möglich ist der Einsatz von wasserlöslichen Emulgatoren, wenn die Einsatzkonzentration kleiner als 0,1 Gew.-% beträgt. Außerdem können Mischungen der oben aufgeführten Verbindungen eingesetzt werden. Höhere Konzentrationen an wasserlöslichen Emulgatoren führen zu schwer isolierbaren kleinen Teilchen. Außerdem ergibt der Einsatz von größeren Mengen an wasserlöslichen Emulgatoren nichttrübungsfreie Lackfilme, und es wird die Beständigkeit gegen Wasser herabgesetzt.

Die erfindungsgemäßen Celluloseester-Polymerkombinationen zeichnen sich durch eine enge Teilchengrößenverteilung und eine ausgezeichnete Rieselfähigkeit aus. Bemerkenswert ist hierbei, daß allgemein kein Feinstaub entsteht und somit ein deutlich verringertes Gefahrenpotential (kaum elektrostatische Aufladung) im Vergleich zu den bekannten celluloseesterhaltigen Produkten vorliegt.

Bedingt durch die ausgezeichnete Rieselfähigkeit und das Fehlen flüchtiger Bestandteile, besteht für den Anwender die Möglichkeit einer Teilmengenentnahme und einer Dosierungsmöglichkeit.

Die erfindungsgemäßen Celluloseester-Polymerkombinationen sind allgemein in den bekannten Lösungsmitteln oder Gemischen für Celluloseesterbindemittel klar und gut löslich, insbesondere in Estern und Ketonen.

Die Viskosität einer 30 %igen Lösung der Celluloseester-Polymerkombination in Ethylacetat liegt vorzugsweise im Bereich von 100 bis 5000 mPa.s, vorzugsweise im Bereich von 200 bis 1000 mPa.s.

Die erfindungsgemäßen Celluloseester-Polymerkombinationen, die alleine oder mit anderen Lackbindemitteln bzw. Lackadditiven kombiniert werden können, sind je nach Zusammensetzung der Celluloseester-Polymerkombination für Lacke unterschiedlicher Anwendungsgebiete, wie z.B. für Holz, Metall, Kunststoff, Papier, Folien, Leder, magnetische Datenträger oder mineralische Untergrundlacke geeignet), wobei die Lackbindemittel, wenn erforderlich, mit isocyanathaltigen Verbindungen zur Qualitätsverbesserung kombiniert werden können.

Als mögliche Kombinationspartner für Celluloseesterbindemittel liegt ein umfangreiches Schrifttum vor. Als Beispiel ist aufgeführt: "Karsten, Lackrohstofftabellen", 8. Auflage, Curt R. Vincentz Verlag, Hannover, 1987.

Es können transparente oder pigmentierte Lacke hergestellt werden.

### Beispiele

In den Beispielen wird die Viskosität unter folgenden Bedingungen übereinstimmend gemessen:
Die Viskosität der 30 gew.-%igen Lösung der erfindungsgemäßen Kombination in Ethylacetat wird im Rotovisko (Fa. Haake) vermessen unter folgenden Bedingungen:

| | |
|---|---|
| Umdrehungszahl: | 2,83 Upm |
| Formkörper: | MV2 |
| Temperatur: | 20°C |

Die flüchtigen Anteile werden mittels Gaschromatographie (Restmonomere und Restüberträger) und Carl-Fischer-Titration (Wasser) bestimmt.

### Beispiel 1

In einem 1 l Glasreaktor werden 184,6 g wasserfeuchte Nitrocellulose Normtyp E 34 (12,0 % N), (enthält 120 g trockene Nitrocellulose) mit einer Lösung von 2,7 g Hydroxypropylmethacrylat, 6,15 g Azobisisobutyronitril (AIBN), 0,56 g 2-Mercaptoethanol und 2,7 g ethoxyliertes Nonylphenol, ca. 43 % Ethylenoxid (Antarox® CO-430) in 117,6 g Butylacrylat versetzt. Das Gemisch wird durch 30 minütiges Rühren mit einem Ankerrührer (100 Upm) in eine hochviskose Wasser-in-Öl-Emulsion überführt. Während der Homogenisierphase wird der Luftsauerstoff durch Stickstoff verdrängt.

Innerhalb von 1h wird eine Lösung von 0,5 g NaHCO₃ in 494 g entionisiertem Wasser zudosiert. 30 min nach Dosierbeginn wird die Rührerdrehzahl von 100 auf 300 Upm gesteigert. Nach einer weiteren Stunde Rühren wird die Rührerdrehzahl auf 200 Upm gesenkt und der Reaktorinhalt auf eine Reaktionstemperatur von 60°C erwärmt. Nach 4h bei 60°C ist die Reaktion beendet.

Das Polymerisat wird abgesaugt und im Vakuum (20 mbar) bei 50°C getrocknet.

Die erreichte Ausbeute beträgt 100 %.

| | |
|---|---|
| Mittlerer Partikeldurchmesser: | 1,05 mm |
| Flüchtige Anteile: | 0,18 % |
| Hydroxylgruppengehalt: | 2,55 % |

### Beispiel 2

184,6 g wasserfeuchte Nitrocellulose (enthält 120 g trockene Nitrocellulose), Normtyp E 34 (12,2 % N), werde mit einer Lösung von 1,2 g Ethylcellulose (N 7), 1,9 g Bis(isopropylxanthogen)disulfid und 6,15 g AIBN in 120 g Butylacrylat versetzt. Das Gemisch wird, wie in Beispiel 1 beschrieben, homogenisiert und durch Zugabe von 494 g 0,1 %iger NaHCO₃-Lösung emulgiert. Die Reaktionstemperatur wird auf 80°C erhöht.

| | |
|---|---|
| Ausbeute: | 100 % |
| Viskosität: | 330 mPa.s |
| mittlerer Partikelduchmesser: | 0,95 mm |
| Hydroxylgruppengehalt: | 2,1 % |
| Flüchtige Anteile: | 0,14 % |

### Beispiel 3

184,6 g wasserfeuchte Nitrocellulose (enthält 120 g trockene Nitrocellulose), Normtyp E 34 (11,8 % N), werden mit 120 g Butylacrylat, 0,48 g Bis(isopropylxanthogen)disulfid und 3,1 g AIBN versetzt. Das Gemisch wird, wie in Beispiel 1 beschrieben, homogenisiert und mit Stickstoff überlagert. Anschließend wird durch langsame Zugabe einer Lösung von 100 mg Natriumdodecylbenzolsulfonat, 50 mg Alkylphenoxypoly(ethylenoxy)ethylester der Phosphorsäure (Gafac® RE 610) und 5,3 g NaHCO₃ in 890 ml entionisiertem Wasser unter Rühren (300 Upm) eine Öl-in-Wasser-Emulsion hergestellt.

Die Polymerisation findet bei 60°C innerhalb von 6 Stunden statt.

| | |
|---|---|
| Ausbeute: | 94 % |
| Viskosität: | 450 mPa.s |
| mittlerer Partikeldurchmesser: | 0,34 mm |
| Hydroxylgruppengehalt: | 2,6 % |
| Flüchtige Anteile: | 0,17 %. |

### Beispiel 4

Die Dispersionsherstellung erfolgte, wie in Beispiel 1 beschrieben, jedoch wurden 20 Gew.-% des Butylacrylates durch Acrylnitril ersetzt und die 2-Mercaptoethanol-Menge auf 1,1 g erhöht.

| | |
|---|---|
| Ausbeute: | 96,6 % |
| Viskosität: | 1900 mPa.s |
| mittlerer Partikeldurchmesser: | 1,16 mm |
| Hydroxylgruppenanteil: | 2,6 % |
| Flüchtige Anteile: | 0,24 % |

### Beispiel 5

332,3 g wasserfeuchte Nitrocellulose Normtyp E 34, 12,0 % N (enthält 216 g trockene Nitrocellulose), werden mit einer Lösung von 2,4 g Bis(isopropylxanthogen)disulfid, 11,1 g AIBN und 1,8 g Ethylcellulose (N 7) in 144 g Butylacrylat versetzt. Das Gemisch wird homogenisiert und durch Zugabe einer Lösung von 0,75 g NaHCO₃ in 1440 ml entionisiertem Wasser emulgiert. Die Polymerisation wird innerhalb von 6 Stunden bei 60°C durchgeführt.

| | |
|---|---|
| Ausbeute: | 98 % |
| Viskosität: | 680 mPa.s |
| mittlerer Partikeldurchmesser: | 1,20 mm |
| Hydroxylgrupengehalt: | 2,9 % |
| Flüchtige Anteile: | 0,21 % |

### Beispiel 6

184,6 g wasserfeuchte Nitrocellulose Normtyp A 27, 11,0 % N (enthält 120 g trockene Nitrocellulose) werden mit 0,48 g Bis(isopropylxanthogen)disulfid, 6,2 g AIBN, 12 g Hydroxypropylmethacrylat und 108 g Butylacrylat versetzt. Nach Homogenisieren und Emulgieren mit einer Lösung von 0,5 g NaHCO₃, 100 mg Natriumdodecylbenzolsulfonat und 50 mg Alkylphenoxpoly(ethylenoxy)ethylester der Phosphorsäure (Gafac® RE 610) in 720 ml entionisiertem Wasser wird für 4 Stunden auf 60°C erwärmt.

| | |
|---|---|
| Ausbeute: | 98,5 % |
| Viskosität: | 560 mPa.s |
| mittlerer Partikledurchmesser: | 0,28 mm |
| Hydroxylgruppengehalt: | 3,5 % |
| Flüchtige Anteile: | 0,23 % |

### Beispiel 7

120 g Celluloseacetat (Cellidor® A, Bayer AG), 0,48 g Bis(isopropylxanthogen)disulfid und 3,1 g AIBN werden in einer Mischung aus 120 g Butylacrylat, 20 g Methylmethacrylat und 4 g Hyroxypropylmethacrylat gelöst. Diese Lösung wird unter Rühren (250 Upm) mit Stickstoff gesättigt und durch langsame Zugabe einer Lösung von 120 mg Natriumdodecylbenzolsulfonat, 60 mg Gafac® RE 610 und 6,3 g NaHCO₃ in 750 ml entionisiertem Wasser in eine Emulsion überführt. Anschließend wird 4h bei 70°C polymerisiert. Das Produkt wird durch Absaugen und Trocknen (60°C, 20 mbar) isoliert.

| | |
|---|---|
| Ausbeute: | 98 % |
| Viskosität: | 280 mPa.s |
| mittlerer Partikeldurchmesser: | 0,45 mm |
| Hydroxylgruppengehalt: | 3,4 % |
| Flüchtige Anteile: | 0,21 % |

### Beispiel 8

120 g Celluloseacetobutyrat (Cellidor®, Bayer AG), 0,48 g Bis(isopropylxanthogen)disulfid und 4,7 g AIBN werden in einer Mischung aus 50 g Butylacrylat, 50 g Butylmethacrylat, 20 g Hydroxypropylmethacrylat und 2,7 g ethoxyliertem Nonylphenol, ca. 43 % EO (Antarox® CO-430) gelöst. Nach Zugabe von 750 ml entionisiertem Wasser wird mit Stickstoff gesättigt und unter Rühren (200 Upm) emulgiert.

Die Polymerisation findet bei 70°C innerhalb von 4h statt.

| | |
|---|---|
| Ausbeute: | 97 % |
| Viskosität: | 320 mPa.s |
| mittlerer Partikeldurchmesser: | 1,4 mm |
| Hydroxylgruppengehalt: | 1,2 % |
| Flüchtige Anteile: | 0,24 % |

Zur anwendungstechnischen Ausprüfung werden die Produkte der Beispiele 1-8 30 %ig in Ethylacetat/Xylol = 1:1 gelöst. 180 µm dicke Naßfilme dieser Lösungen werden auf Glasplatten aufgezogen und getrocknet. Nach 24 Stunden werden die Pendelhärten (nach König) bei 20°C gemessen. Das Aussehen der Filme wurde visuell beurteilt.

| Beispiel | Pendelhärte (nach König) | Aussehen der Filme |
|---|---|---|
| 1 | 172 s | klar, stippenfrei |
| 2 | 165 s | klar, stippenfrei |
| 3 | 162 s | klar, stippenfrei |
| 4 | 155 s | klar, stippenfrei |
| 5 | 178 s | klar, stippenfrei |
| 6 | 145 s | klar, stippenfrei |
| 7 | 184 s | klar, stippenfrei |
| 8 | 178 s | klar, stippenfrei |

## Patentansprüche

1. Celluloseester-Polymer-Kombinationen enthaltend wenigstens einen Celluloseester A und wenigstens ein polymerisiertes Monomer B sowie ein wasserunlösliches Dispergierhilfsmittel D, dadurch gekennzeichnet, daß B folgender Formel entspricht 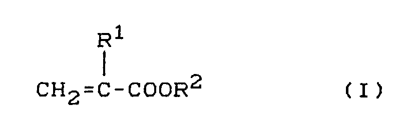 in der
R¹ ein Wasserstoffatom oder eine Methylgruppe und
R² ein Wasserstoff, ein Alkylrest mit 1-20 Kohlenstoffatomen, ein Cycloalkylrest mit 5 oder 6 Kohlenstoffatomen, -(CH₂-CH₂-O)ₙ-R³ (mit R³ als H, CH₃ oder C₂H₅ und n = 2 - 50), -C₆H₅ oder -CH₂C₆H₅ bedeuten,
und wobei die Teilchen der Kombination im wesentlichen eine Größe von 0,1 bis 10 mm aufweisen.

2. Celluloseester-Polymer-Kombinationen gemäß Anspruch 1, dadurch gekennzeichnet, daß das wasserunlösliche Dispergierhilfsmittel D in einer Menge von maximal 5 Gew.-%, bezogen auf alle Feststoffe der erfindungsgemäßen Kombination, enthalten ist.

3. Celluloseester-Kombinationen nach wenigstens einem der vorhergehenden Ansprüche, dadurch gekennzeichnet, daß der Celluloseester A ein Cellulosenitrat ist.

4. Celluloseester-Polymer-Kombinationen gemäß wenigstens einem der vorhergehenden Ansprüche, dadurch gekennzeichnet, daß der Gewichtsanteil der Hydroxylgruppen von A und B bezogen auf den Gesamtfeststoffgehalt zwischen 0,1 und 9 Gew.-% liegt.

5. Celluloseester-Polymer-Kombinationen gemäß wenigstens einem der vorhergehenden Ansprüche, dadurch gekennzeichnet, daß die Teilchen der Kombination homogen aus A und polymerisiertem B aufgebaut sind.

6. Celluloseester-Polymer-Kombinationen gemäß wenigstens einem der vorhergehenden Ansprüche, daß zusätzlich weitere Monomere C enthalten sind.

7. Verfahren zur Herstellung einer Celluloseester-Polymer-Kombination gemäß einem der vorhergehenden Ansprüche, dadurch gekennzeichnet, daß eine Emulsion wenigstens eines Celluloseesters A und wenigstens eines Monomers B der Formel 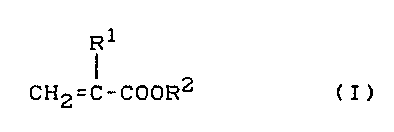 in der
R¹ ein Wasserstoffatom oder eine Methylgruppe und
R² ein Wasserstoff, ein Alkylrest mit 1-20 Kohlenstoffatomen, ein Cycloalkylrest mit 5 oder 6 Kohlenstoffatomen, -(CH₂-CH₂-O)ₙ-R³ (mit R³ als H, CH₃ oder C₂H₅ und n = 2 - 50), -C₆H₅ oder -CH₂C₆H₅ bedeuten,
in wäßrigem Medium in Gegenwart eines wasserunlöslichen Dispergierhilfsmittels D und gegebenenfalls in Gegenwart von wasserlöslichen Emulgatoren in einer Menge von bis zu 0,1 Gew.-% mittels öllöslicher radikalbildender Initiatoren polymerisiert und der Festkörper abgetrennt wird.

8. Verfahren zur Herstellung eines Lackes, dadurch gekennzeichnet, daß eine Celluloseester-Polymer-Kombination gemäß wenigstens einem der vorhergehenden Ansprüche verwendet wird.

## Claims

1. Cellulose ester/polymer combinations containing at least one cellulose ester A and at least one polymerizable monomer B and a water-insoluble dispersion aid D, characterized in that B corresponds to the following formula 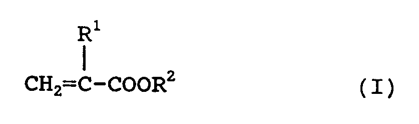 in which
R¹ is a hydrogen atom or a methyl group and
R² is a hydrogen atom, a C₁₋₂₀ alkyl radical, a C₅ or C₆ cycloalkyl radical, -(CH₂-CH₂-O)ₙ-R³ (with R³ as H, CH₃ or C₂H₅ and n = 2 - 50), -C₆H₅ or -CH₂C₆H₅,
most of the particles of the combination having a size of 0.1 to 10 mm.

2. Cellulose ester/polymer combinations as claimed in claim 1, characterized in that the water-insoluble dispersion aid D is present in a quantity of at most 5% by weight, based on all the solids of the combination according to the invention.

3. Cellulose ester combinations as claimed in at least one of the preceding claims, characterized in that the cellulose ester A is a cellulose nitrate.

4. Cellulose ester/polymer combinations as claimed in at least one of the preceding claims, characterized in that the percentage by weight of the hydroxyl groups of A and B, based on the total solids content, is between 0.1 and 9% by weight.

5. Cellulose ester/polymer combinations as claimed in at least one of the preceding claims, characterized in that the particles of the combination are made up homogeneously of A and polymerized B.

6. Cellulose ester/polymer combinations as claimed in at least one of the preceding claims, characterized in that other monomers C are additionally present.

7. A process for the production of the cellulose ester/ polymer combinations claimed in any of the preceding claims, characterized in that an emulsion of at least one cellulose ester A and at least one monomer B corresponding to the following formula 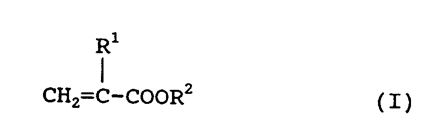 in which
R¹ is a hydrogen atom or a methyl group and
R² is a hydrogen atom, a C₁₋₂₀ alkyl radical, a C₅ or C₆ cycloalkyl radical, -(CH₂-CH₂-O)ₙ-R³ (with R³ as H, CH₃ or C₂H₅ and n = 2 - 50), -C₆H₅ or -CH₂C₆H₅,
is polymerized in aqueous medium in the presence of a water-insoluble dispersion aid D and optionally in the presence of water-soluble emulsifiers in a quantity of up to 0.1% by weight by means of oil-soluble radical-forming initiators and the solid is separated off.

8. A process for the production of a lacquer, characterized in that a cellulose ester/polymer combination as claimed in at least one of the preceding claims is used.

## Revendications

1. Combinaisons ester de cellulose-polymère, contenant au moins un ester de cellulose A et au moins un monomère polymérisé B ainsi qu'un agent auxiliaire de dispersion D insoluble dans l'eau, caractérisées en ce que B répond à la formule suivante : 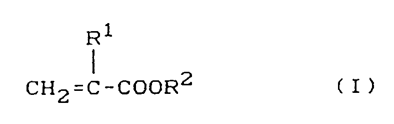 dans laquelle
R¹ désigne un atome d'hydrogène ou un groupe méthyle et
R² est un atome d'hydrogène, un reste alkyle ayant 1 à 20 atomes de carbone, un reste cycloalkyle ayant 5 ou 6 atomes de carbone, -(CH₂-CH₂-O)ₙ-R³ (où R³ représente H, CH₃ ou C₂H₅ et n a une valeur de 2 à 50), -C₆H₅ ou -CH₂C₆H₅,
les particules de chaque combinaison ayant principalement un diamètre de 0,1 à 10 mm.

2. Combinaisons ester de cellulose-polymère suivant la revendication 1, caractérisées en ce que l'agent auxiliaire de dispersion D insoluble dans l'eau est présent en une quantité au maximum égale à 5 % en poids, par rapport à toutes les matières solides de la combinaison conforme à l'invention.

3. Combinaisons ester de cellulose-polymère suivant l'une au moins des revendications précédentes, caractérisées en ce que l'ester de cellulose A est un nitrate de cellulose.

4. Combinaisons ester de cellulose-polymère suivant l'une au moins des revendications précédentes, caractérisées en ce que la proportion en poids des groupes hydroxyle de A et B se situe entre 0,1 et 9 % en poids par rapport à la teneur totale en matière solide.

5. Combinaisons ester de cellulose-polymère suivant l'une au moins des revendications précédentes, caractérisées en ce que leurs particules sont constituées, de façon homogène, de A et de a polymérisé.

6. Combinaisons ester de cellulose-polymère suivant l'une au moins des revendications précédentes, caractérisées en ce qu'elles contiennent en outre d'autres monomères C.

7. Procédé de production d'une combinaison ester de cellulose-polymère suivant l'une des revendications précédentes, caractérisé en ce qu'on polymérise une émulsion d'au moins un ester de cellulose A et d'au moins un monomère B de formule 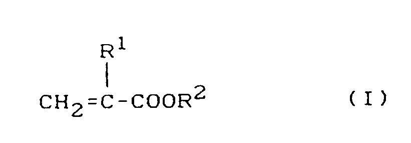 dans laquelle
R¹ est un atome d'hydrogène ou un groupe méthyle et
R² représente l'hydrogène, un reste alkyle ayant 1 à 20 atomes de carbone, un reste cycloalkyle ayant 5 ou 6atomes de carbone, -(CH₂-CH₂-O)ₙ-R³ (où R³ représente H, CH₃ ou C₂H₅ et n a une valeur de 2 à 50), -C₆H₅ ou -CH₂C₆H₅,
dans un milieu aqueux en présence d'une substance auxiliaire de dispersion D insoluble dans l'eau et le cas échéant en présence d'émulsionnants solubles dans l'eau, en une quantité allant jusqu'à 0,1 % en poids au moyen d'initiateurs solubles dans l'huile engendrant des radicaux, et on sépare la matière solide.

8. Procédé de production d'une laque, caractérisé en ce qu'on utilise une combinaison ester de cellulosepolymère suivant l'une au moins des revendications précédentes.
